# FASCICULE DE BREVET EUROPEEN

(11) **EP 1 795 803 B1**
(45) Date de publication et mention de la délivrance du brevet: **09.08.2017**
(21) Numéro de dépôt: 06291868.5
(22) Date de dépôt: 04.12.2006
(51) Int. Cl.: F23D 14/56

(54) **Outil à main à combustion de gaz modulaire**
Modulares gasbefeuertes Handwerkzeug
Modular gas burning hand tool

(30) Priorité: 06.12.2005 FR 0512357
(43) Date de publication de la demande: 13.06.2007
(73) Titulaire: Guilbert Express, 75011 Paris (FR)
(72) Inventeur: Guillou, Yves, 77500 Chelles (FR); Bouvier, Daniel, 75011 Paris (FR); Le Drappier, Christophe, 93500 Pantin (FR)
(74) Mandataire: Plaçais, Jean Yves

(56) Documents cités:
- FR-A- 2 520 090
- GB-A- 1 503 320
- GB-A- 1 576 139
- GB-A- 2 030 280
- US-A- 3 917 442
- US-B1- 6 227 846

## Description

L'invention concerne un outil à main à combustion de gaz.
Un tel outil se présente généralement sous la forme d'un corps allongé traversé longitudinalement par un conduit dans lequel circule du gaz à enflammer. Le corps est alors prolongé d'une partie brûleur généralement creuse dans laquelle débouche ledit conduit. La partie brûleur est munie à son extrémité libre de moyens de combustion de gaz capables d'enflammer le gaz. Ce sont les flammes ainsi produites qui sont utilisées.

Les outils de ce type comprennent notamment les chalumeaux qui sont principalement utilisés pour la découpe ou le soudage de matériaux, le plus souvent métalliques.
Ils englobent également les outils à main utilisés pour chauffer toutes sortes de matériaux thermodurcissables, thermoformables, thermorétractables, matériaux que l'on fait adhérer par la chaleur et analogues. On note que des chalumeaux peuvent également être utilisés à cette fin à condition de réduire leur puissance de chauffage.
À titre d'exemple des outils de ce type sont utilisés dans le domaine du bâtiment par les couvreurs pour recouvrir les toits de matériau imperméable thermodurcissable, lequel se trouve généralement sous la forme de bandes enroulées.
Les outils à main à combustion de gaz sont également employés dans le domaine de la logistique et du transport pour rétracter les films plastiques entourant les palettes de marchandises.

Un outil à main de combustion à gaz est ainsi décrit par le document US-B1-6227846. Selon l'application, les outils de ce type présentent une partie brûleur de forme spécifique liée à la tâche dévolue à l'outil. Par exemple, la partie brûleur d'un chalumeau présente une configuration différente de celle d'une partie brûleur d'outil de couvreur. En effet, dans le premier cas on cherche à obtenir une grande quantité de chaleur sur une surface réduite (c'est le cas par exemple de la découpe au chalumeau), alors que dans le second on souhaite une plus grande surface de chauffage (pour traiter rapidement de grandes zones de travail) mais une quantité de chaleur moindre.

Les outils aujourd'hui disponibles sont de ce fait spécifiques alors qu'ils fonctionnent sur le même principe.

L'invention a pour but d'améliorer la situation en proposant un outil susceptible d'être utilisé pour des tâches éventuellement différentes.

Accessoirement, l'utilisation de l'outil selon l'invention doit être aussi peu pénible que possible, la plus sûre et la plus pratique, pour permettre à l'outil d'être utilisé sur de longues périodes de travail.

Un objectif secondaire de l'invention est ainsi de réaliser un outil léger, qui chauffe peu les parties non utiles au travail et dont l'ergonomie est étudiée, par exemple pour diminuer les efforts physiques du manipulateur.

En outre, un autre objectif secondaire de l'invention est de prévoir un outil fiable visant à empêcher les accidents, notamment les incendies et les explosions.

Enfin, l'outil selon l'invention doit pouvoir être facilement réparé et être réalisé à moindre coût.

L'invention prévoit un outil à main à combustion de gaz selon l'objet de la revendication 1. Ainsi, la partie brûleur peut être séparée du corps allongé et de la poignée.
Un premier avantage réside en ce que la partie brûleur peut être remplacée par une partie brûleur de forme différente, adaptée à une tâche différente, sans que le corps allongé et la poignée soient changés. En outre, elle peut être remplacée en cas de détérioration.
Des caractéristiques optionnelles de l'invention, complémentaires ou de substitution, sont énoncées ci-après :
- La portion de jonction de la partie brûleur et la portion de jonction du corps allongé présentent des allures de révolution.
- La portion de jonction de la partie brûleur présente une rainure annulaire de section trapézoïdale dont un flanc forme ladite surface oblique.
- La portion de jonction de la partie brûleur et la portion de jonction du corps allongé sont conformées de manière à pivoter l'une par rapport à l'autre sur 360 degrés.
- La partie brûleur présente une portion intermédiaire généralement évasée entre sa portion de jonction et son extrémité.
- Les moyens de combustion comprennent une grille d'accrochage de flamme fermant la partie brûleur.
- La grille d'accrochage de flamme présente une pluralité de premiers trous répartis sur sensiblement toute la surface de ladite grille et entre lesquels sont intercalés de second trous de plus petite taille.
- Les premiers trous et les seconds trous sont répartis sur au moins deux zones distinctes de la grille d'accrochage de flamme, lesdites zones étant séparées par une zone de la grille d'accrochage de flamme dépourvue de premiers et de seconds trous.
- Le corps allongé comprend un organe d'injection de gaz débouchant centralement dans ledit conduit.
- L'outil comprend un dispositif d'alimentation en gaz du corps allongé susceptible d'être obturé selon la position d'un levier d'actionnement prévu sur la poignée de préhension.
- Une pièce mobile est maintenue dans une première position, ou position d'obturation du dispositif d'alimentation en gaz, à l'encontre de moyens de rappel élastique travaillant en compression, par le levier d'actionnement, lorsque celui-ci est dans une position de repos.
- La pièce mobile est libérée de la première position par pivotement du levier d'actionnement et déplacée jusqu'à une autre position, ou position de libération du dispositif d'alimentation en gaz, par l'action des moyens de rappel élastique.
- La pièce mobile est maintenue dans ladite première position par l'intermédiaire d'une surface de came saillante solidaire du levier d'actionnement, un sommet de cette came conique étant en contact avec la pièce mobile dans cette première position et se déplaçant à la fois axialement et transversalement par rapport au mouvement de translation de la pièce mobile, en libérant cette dernière lors du pivotement du levier d'actionnement.
- La pièce mobile est maintenue contre la came conique dans ladite autre position par l'action des moyens de rappel élastique.
- Des moyens de couplage permettant le pivotement du levier d'actionnement sont agencés entre ce dernier et le dispositif d'alimentation, les moyens de couplage comprenant un ressort de compression se comprimant partiellement lors dudit pivotement et rappelant le levier d'actionnement dans sa position de repos en se détendant.
- L'outil comprend en outre une rallonge généralement tubulaire présentant une première portion de jonction conformée de manière à s'emmancher avec la portion de jonction du corps allongé et une seconde portion de jonction conformée pour s'emmancher avec la portion de jonction de la partie brûleur.
- Des moyens d'arrêt en rotation en au moins une position choisie sont agencés entre ladite première portion de jonction de la rallonge et la portion de jonction du corps allongé.
- Les moyens d'arrêt en rotation comprennent au moins un évidement ménagé dans ladite première portion de jonction de la rallonge, dans lequel se loge un doigt monté dans la portion de jonction par l'intermédiaire de moyens de rappel élastique.
- Une poignée de préhension supplémentaire est susceptible d'être fixée de manière détachable sur la rallonge.
- La rallonge est de type télescopique.
- La rallonge comprend une articulation agencée au voisinage de la seconde portion de jonction.
- La rallonge comprend deux sections tubulaires et l'articulation est constituée de deux parties montées respectivement sur lesdites sections et agencées de manière à tourner autour d'un axe oblique par rapport à la direction longitudinale de chaque section tubulaire.
- L'outil comprend un déflecteur de chaleur monté sur la poignée de préhension.
- L'outil comprend un repose-bras fixé de manière détachable sur la poignée de préhension.
- Les moyens de combustion comprennent des moyens d'allumage de type piézo-électrique.
- Les moyens d'allumage comprennent des moyens de production d'étincelles alimentés par un organe piézo-électrique actionné par le levier d'actionnement.
- Les moyens de production d'étincelles sont disposés dans la partie brûleur et reliés à un fil électrique terminé par une fiche qui est reçue de manière amovible dans une borne montée sur le corps allongé et électriquement reliée à l'organe piézo-électrique.
- La liaison électrique entre la borne et l'organe piézo-électrique comprend un puits ménagé sensiblement perpendiculairement à la borne, un fil dénudé relié à l'organe piézo-électrique et logé au fond dudit puits et une goupille métallique logée dans le puits de manière à mettre en contact le fil dénudé et la fiche lorsque celle-ci est insérée dans la borne.
- Les moyens d'allumage comprennent un puits s'ouvrant à proximité de la grille d'accrochage de flamme au fond duquel sont agencés les moyens de production d'étincelle.
- La portion de jonction de la partie brûleur est réalisée en matériau électriquement conducteur, des moyens de rappel élastique supportant un doigt, logés dans la portion de jonction du corps, sont réalisés en des matériaux électriquement conducteurs, et les moyens de rappel élastique s'appuient sur une partie métallique extérieure de l'organe piézo-électrique reliée à la masse de ce dernier.
- Le corps allongé supporte un organe d'accrochage de l'outil susceptible d'être rabattu.

D'autres caractéristiques et avantages de l'invention apparaîtront à l'examen de la description détaillée ci-après, et des dessins annexés sur lesquels :
- la figure 1 est une vue en coupe longitudinale d'un outil à main à combustion de gaz selon l'invention,
- la figure 2 est une d'arrière de l'outil de la figure 1,
- la figure 3 est une vue partielle de l'outil, agrandie et en coupe selon la ligne III-III de la figure 1,
- la figure 4 est un détail agrandi de la figure 1,
- la figure 5 est un autre détail agrandi de la figure 1,
- la figure 6 est une vue partielle en perspective de l'outil,
- la figure 7 est une vue en perspective de l'outil muni d'accessoires,
- la figure 8 est une vue partielle en perspective de l'ensemble de la figure 7,
- les figures 9 et 10 sont des vues de côté de l'outil de la figure 1 muni d'autres accessoires dans deux configurations d'utilisation différentes,
- les figures 11 et 12 sont des vues en coupe d'une partie de l'outil des figures 9 et 10 respectivement,
- la figure 13 est une vue en coupe longitudinale d'une partie brûleur pour l'outil, et

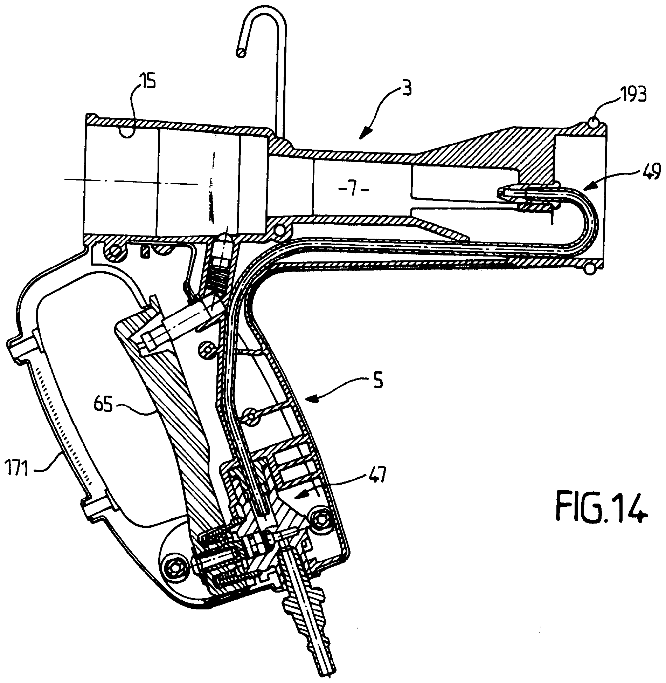

- la figure 14 est une vue analogue à la figure 1, l'outil étant dépourvu de partie brûleur.

Les dessins annexés pourront non seulement servir à compléter l'invention, mais aussi contribuer à sa définition, le cas échéant.

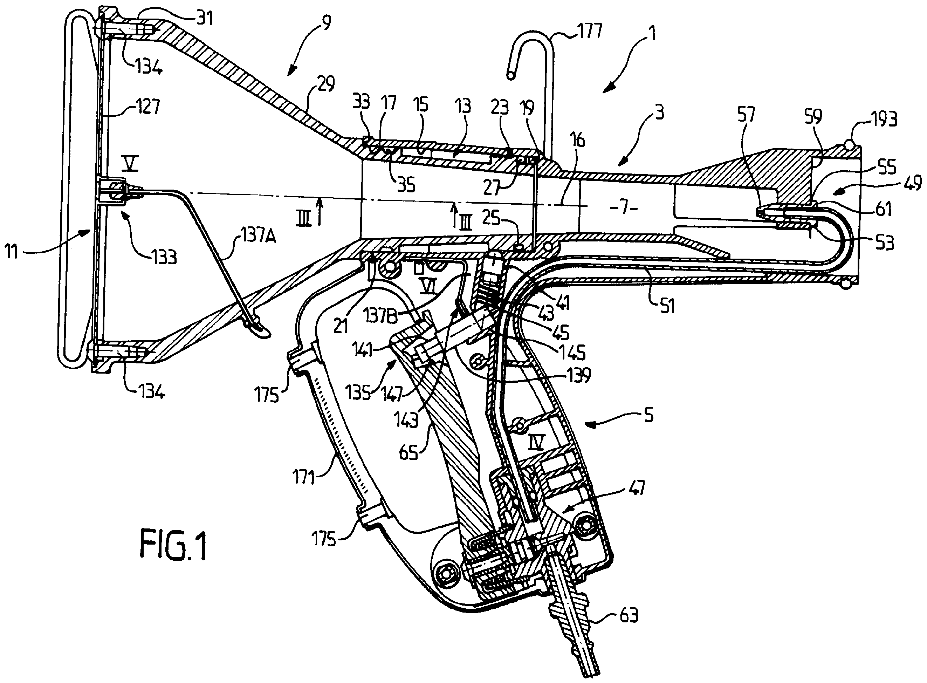

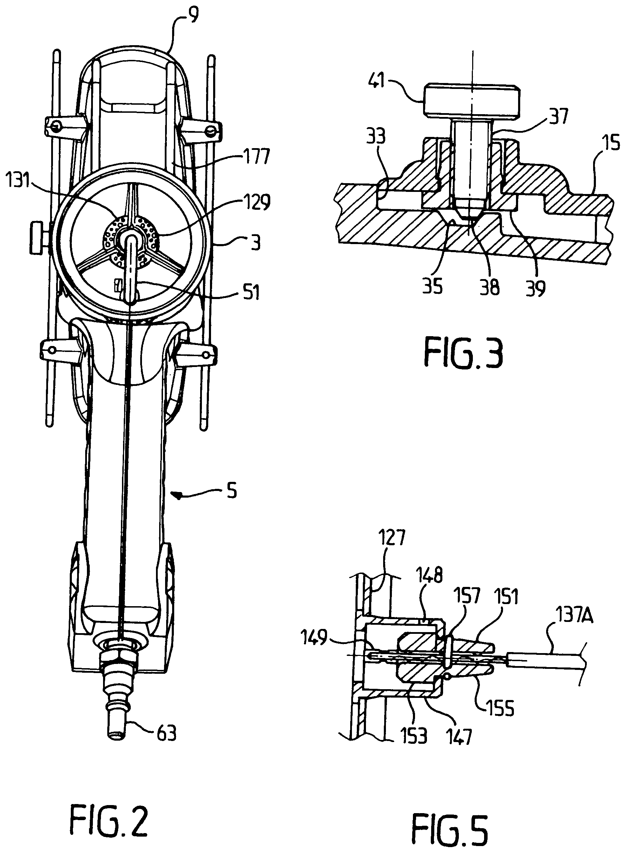

Les figures 1 et 2 représentent un outil à main 1 à combustion de gaz selon l'invention. L'outil 1 est essentiellement constitué d'un corps allongé 3, supporté par une poignée de préhension 5 et traversé longitudinalement par un conduit de gaz à enflammer 7 débouchant dans une partie brûleur 9 généralement creuse et munie à son extrémité libre de moyens de combustion de gaz 11. Ces moyens de combustion 11 produisent une ou des flammes pour le chauffage lors de l'utilisation de l'outil 1.

Ici, le conduit 7 se présente sous la forme d'un alésage axial de révolution ménagé dans le corps 3.

La partie brûleur 9 présente une portion de jonction 13 opposée aux moyens de combustion 11 et conformée de manière à s'emmancher réversiblement dans une portion de jonction 15 du corps 3. Ici, la portion de jonction 13 est de révolution et s'emmanche dans la portion de jonction 15 prévue sous la forme d'un alésage également de révolution ménagé dans le corps 3. Les portions 13 et 15 sont en outre conformées de manière à pivoter l'une par rapport à l'autre sur 360° autour d'un axe longitudinal commun 16.

En particulier, l'alésage réalisant la portion de jonction 15 présente une première section d'alésage 17 d'un diamètre adapté à celui d'une première section de palier 21 réalisée extérieurement sur la portion de jonction 13, les sections 17 et 21 étant en contact lorsque les portions 13 et 15 sont emmanchées l'une dans l'autre. De même, l'alésage de la portion de jonction 15 présente une seconde section d'alésage 19 de diamètre adapté à celui d'une seconde section de palier 23 de la portion 13. Ici, les paliers 21 et 23 sont respectivement agencés à proximité des deux extrémités de la portion 13.

Les paliers 21 et 23 réalisent en coopération avec les alésages 17 et 19 un centrage long entre les portions 13 et 15. L'ajustement entre les alésages 17 et 19 et les paliers 21 et 23 est choisi de manière à permettre l'emmanchement sans effort excessif des portions 13 et 15. Avantageusement, cet ajustement est choisi de manière à permettre en outre une rotation des portions 13 et 15 l'une par rapport à l'autre, de préférence sur 360 degrés, ce qui permet de faire pivoter la partie brûleur 9 par rapport au corps 3 et à la poignée 5. Ceci est plus particulièrement intéressant lorsque l'extrémité de la partie brûleur 9 portant les moyens de combustion 11 ne présente pas une forme de révolution.

Le palier 23 présente une gorge annulaire 25 logeant un joint annulaire 27 qui assure l'étanchéité du contact entre les portions 13 et 15 contre le mélange gaz combustible-air, appelé également gaz à enflammer, circulant dans le conduit 7.

Dans le mode de réalisation de la figure 1, le palier 21 présente un diamètre légèrement plus grand que celui du palier 23.

La portion de jonction 13 est prolongée par une portion intermédiaire 29 évasée creuse, elle-même prolongée par une portion extrême 31 creuse portant les moyens de combustion 11. Ici, la portion 31 présente un section transversale généralement rectangulaire.

La portion de jonction 13 est traversée par un alésage 32 qui débouche à l'intérieur de la partie intermédiaire 29 et qui prolonge le conduit 7 lorsque la partie brûleur 9 est montée sur le corps 3. L'alésage 32 peut également être vu comme une partie du conduit 7.

L'alésage 32 s'évase légèrement en direction de la portion 29.

Dans un mode de réalisation avantageux, la partie brûleur 9 est réalisée d'un seul tenant sous la forme d'une coque obtenue par exemple par moulage d'un matériau métallique. Le corps 3 et la poignée 5 sont de préférence solidaires par exemple sous la forme d'une coque moulée en matière plastique. Cette coque est avantageusement prévue en deux parties assemblées par vissage, constituant chacune une moitié du corps 3 et une moitié de la poignée 5.

Du côté de la portion 29, la portion de jonction 13 se termine par un épaulement 33 contre lequel l'extrémité de la portion de jonction 15 vient en butée. Entre autres choses, ceci facilite l'emmanchement des portions 13 et 15.

Une rainure annulaire 35 de section trapézoïdale est agencée sur l'extérieur de la portion de jonction 13. Une vis 37 est logée dans un taraudage ménagé dans la portion de jonction 15. Le bout de la vis 37 vient au contact de l'un des flancs 38 de la rainure 35. Ce flanc étant disposé obliquement par rapport à l'axe longitudinal des portions 13 et 15, le vissage de la vis 37 provoque un effort axial sur ce flanc et donc sur la portion 13. Cet effort se retrouve au niveau de l'épaulement 33 contre l'extrémité de la portion 15. Ainsi, la vis 37, la rainure 35 et l'épaulement 33 forment des moyens de serrage de la partie brûleur 9 contre le corps allongé 3 et garantissent un effort de serrage important sous l'effet d'un couple appliqué sur la vis 37 assez faible. La vis 37 présente avantageusement un bout tronconique de même inclinaison que le flanc 38.

De préférence, le taraudage est ménagé dans une bague 39 emmanchée en force dans la paroi de la portion de jonction 15, comme montré sur la figure 3. Ceci permet d'une part de remplacer la bague 39 lorsque le taraudage est usé ou abîmé, du fait par exemple des vissages successifs. Ceci est important car l'obtention d'un serrage convenable nécessite un jeu aussi réduit que possible dans le vissage. D'autre part, ceci permet de réaliser le corps 3 et la bague 39 en des matériaux différents. Ainsi, le corps 3 peut être réalisé en matière plastique tandis que la bague 39 est réalisée dans un matériaux métallique.

De préférence, la bague 39 est munie d'un collet facilitant l'emmanchement en force. La tête 41 de la vis 37 peut être moletée pour faciliter sa manipulation ou présenter une empreinte, par exemple à six pans creux, permettant l'utilisation d'un outil, par exemple une clé six pans.

On fait à nouveau référence à la figure 1. Un téton 41 est logé avec un ressort de compression 43 dans un perçage 45 ménagé dans le corps 3 et disposé transversalement à l'axe longitudinal 16. Le ressort 43 sollicite le téton 41 vers l'intérieur de la portion de jonction 15, en contact contre la portion de jonction 13, par exemple au niveau du palier 23. Le ressort 43 autorise le retrait du téton 41 sous l'effet d'un effort appliqué dans le sens de compression. Le rôle du téton 41 sera expliqué dans la suite de la description.

L'outil 1 comprend en outre un dispositif d'alimentation en gaz 47 relié à un organe d'injection ou injecteur 49, par l'intermédiaire d'un tube de circulation de gaz 51. L'injecteur 49 est disposé dans une partie arrière du corps 3, c'est-à-dire opposée à la partie brûleur 5. L'injecteur 49 est disposé de manière coaxiale par rapport au conduit 7.

Ici, l'injecteur 49 prend la forme d'une douille 53 de révolution percée de part en part et qui présente un alésage d'entrée 55 de diamètre adapté au diamètre extérieur du tube 47 de manière à permettre l'emmanchement de ce dernier dans l'alésage 55. La douille 53 présente en outre un alésage de sortie 57 de plus petit diamètre par lequel le gaz de combustion est éjecté à grande vitesse. La douille 53 est emmanchée dans un trou débouchant ménagé dans une paroi radiale 59 du corps 3. De préférence, la douille 53 présente un collet 61 venant en appui contre la paroi 59 lors de l'introduction de la douille facilitant ainsi un emmanchement en force.

Le dispositif d'alimentation 47 est susceptible d'être relié à une réserve de gaz de combustion, par exemple au moyen d'un raccord 63 standard conformé pour recevoir une extrémité d'un tuyau flexible.

Le dispositif d'alimentation 47 est commandé par un levier d'actionnement 65 monté sur la poignée 5. Dans une position de repos du levier 65, le dispositif d'alimentation 47 est obturé et interdit alors le passage du gaz de combustion de l'intérieur du raccord 63 au tube 51. Le dispositif d'alimentation 47 est libéré par pression sur le levier 65 en sorte que le passage du gaz est autorisé. Le dispositif d'alimentation 47 empêche tout échappement de gaz et/ou toute création de flamme lorsque la poignée n'est pas actionnée pour éviter des accidents, en particulier des incendies, des explosions ou des brûlures. Ce type de dispositif est parfois qualifié par le terme "homme mort". On parle alors de poignée homme mort.

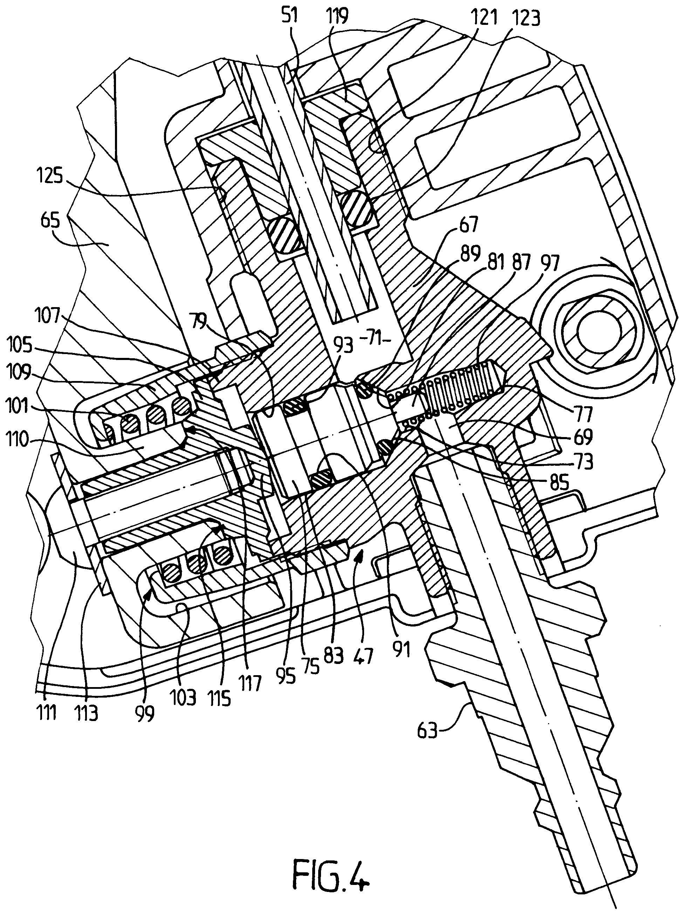

La figure 4 détaille le dispositif d'alimentation 47 et sa liaison avec le levier 65.

Le dispositif d'alimentation 47 est essentiellement constitué d'un corps 67 dans lequel sont ménagées une chambre d'entrée de gaz 69 qui communique avec le raccord 63 et une chambre de sortie de gaz 71 qui communique avec le tube 51. Les chambres 69 et 71 sont mises en communication de fluide entre elles par un conduit 73 à l'intérieur duquel un obturateur 75 est capable de se mouvoir en translation. L'obturateur 75 est conformé en fonction du conduit 73 de manière à obturer ce dernier dans une première position.

Ici, les chambres 69 et 71 sont réalisées sous la forme de deux perçages d'axes parallèles, espacés l'un de l'autre, tandis que le conduit 73 se présente sous la forme d'un perçage d'axe coplanaire aux axes des chambres 69 et 71 et perpendiculaire à ces derniers. D'autres dispositions peuvent être envisagées.

Le conduit 73 présente une section de petit diamètre 77 communiquant avec la chambre 69, une section de plus grand diamètre 79 communiquant avec la chambre 71, et une section intermédiaire 81 tronconique reliant les sections 77 et 79.

L'obturateur 75 présente une section principale 83 généralement cylindrique dont le diamètre nominal est adapté au diamètre de la section 79 et une section de contact 85 généralement tronconique dont l'angle au sommet est adapté à celui de la section 81. Optionnellement, la section 85 se prolonge par une section terminale 87 généralement cylindrique et de diamètre inférieur au diamètre de la section 77.

Dans la première position de l'obturateur 75, la section 85 est en appui sur la section 81 en sorte que le conduit 73 est obturé entre les sections 77 et 75. En outre, une rainure annulaire (non référencée) ménagée sur la section intermédiaire 85 loge un joint d'étanchéité 89 assurant l'étanchéité du contact entre les sections 85 et 81. On comprend que dans d'autres positions de l'obturateur 75, le gaz de combustion peut passer de la chambre 69 à la chambre 71.

La section 83 présente avantageusement une gorge annulaire 91 logeant un joint d'étanchéité 93 assurant l'étanchéité entre l'obturateur 75 et la section 79, c'est-à-dire empêchant tout échappement de gaz de la chambre 69 vers l'extérieur par cette section 79.

L'obturateur 85 est maintenu dans ladite première position par l'extrémité d'un doigt de came 95 solidaire du levier 65 s'appuyant sur l'extrémité libre de la section 83, à l'encontre d'un ressort de compression 97 comprimé disposé entre l'obturateur 85 et le corps 67. Ici, le ressort 97 est logé dans le conduit 77 en appui sur le fond de ce conduit 77 et sur l'extrémité de plus petit diamètre de la section tronconique 83. En particulier, la section terminale 87 se loge à l'intérieur du ressort 97 pour guider la compression de ce dernier.

L'extrémité du doigt 95 disposée vers l'obturateur 75 présente une forme de cône très aplati. Dans la position de repos du levier 65, le sommet dudit cône est en contact avec l'obturateur 75, l'obturateur 75 est lui dans ladite première position.

Le levier 65 est relié au corps 67 par des moyens de couplage 99 agencés en partie basse du levier qui autorisent un pivotement limité du levier 65 par rapport au corps 67 sous l'effet d'un effort appliqué en partie haute. On entend par partie basse la partie la plus éloignée du corps 3, la partie haute étant opposée à la partie basse.

Le pivotement du levier 65 fait pivoter le doigt 95 en sorte que le sommet de ce dernier tend à s'écarter de l'axe de l'obturateur 75. Sous l'effet du ressort 97, qui se détend mais reste comprimé, le contact entre l'obturateur 75 et le doigt 95 se déplace du sommet dudit cône vers sa génératrice tout en provoquant le déplacement de l'obturateur 75 hors de ladite première position sur une course très réduite mais suffisante pour autoriser le passage du gaz.

Les moyens de couplage 99 entre le levier 65 et le corps 67 comprennent un ressort de compression 101 agencé entre la partie basse du levier 65 et le corps 67. Le ressort 101 permet un pivotement d'amplitude limitée sans arbre ni palier du levier 65 qui comprime une partie de ce ressort 101. En l'absence d'effort appliqué en partie haute du levier 65, le ressort 101 rappelle ce dernier dans sa position de repos.

Ici, le ressort 101 est logé presque entièrement dans un évidement 103 annulaire ménagé dans le levier 65. Le ressort 101 est en appui contre une rondelle annulaire 105 solidaire du levier 65 s'appuyant elle-même contre une bordure circulaire 107 agencée sur le corps 67. Lors du pivotement du levier 65, une partie de cette rondelle 105 peut ne plus être en contact avec la bordure 107 tandis que l'autre partie sert d'appui pour faciliter ledit pivotement. Dans le mode réalisation de la figure 4, le doigt 95 et la rondelle 105 sont venus de matière. Le ressort 101 et la rondelle 105 sont maintenus à proximité l'un de l'autre et à proximité du corps 67 au moyen d'une douille 109 enserrant ces éléments. La douille 109 est fixée sur le corps 67, par exemple par vissage. La douille 109 présente un rebord sur lequel l'extrémité du ressort 101 opposée à la rondelle 105 peut s'appuyer.

L'évidement annulaire 103 délimite une portion 110 de révolution du levier dans laquelle un perçage longitudinal débouchant loge en partie le doigt 95, lequel est réalisé ici en tant que pièce de révolution. Le doigt 95 est fixé au moyen d'une vis 111, qui est logée dans un taraudage longitudinal prévu dans le doigt et dont la tête s'appuie sur une rondelle 113 posée sur le levier 65. Un épaulement 115 prévu sur le doigt 95 bute contre une extrémité libre 117 de la portion 110 sous l'effet du vissage de la vis 111. Le ressort 101 et la douille 109 entourent la portion 110.

Sur la figure 4, une bague de centrage 119 traversée par le tube 51 réalise la jonction entre ce tube 51 et la chambre 71. La bague 119 présente un diamètre extérieur adapté au diamètre d'un alésage 121, ménagé dans le corps 67 et débouchant dans la chambre 71. La bague 119 est ici munie d'une collerette qui facilite son emmanchement dans l'alésage 121. Un joint d'étanchéité 123 annulaire est monté entre le tube 51 et l'alésage 121 de manière à assurer l'étanchéité de la jonction entre ce tube 51 et la chambre 71.

Extérieurement, la partie du corps 67 qui comprend l'alésage 121 présente une allure cylindrique et est logée dans un alésage cylindrique 125 ménagé dans la poignée 5.

Comme le montre la figure 1, les moyens de combustion 11 comprennent une grille d'accrochage de flamme 127 fermant la partie évasée 9.

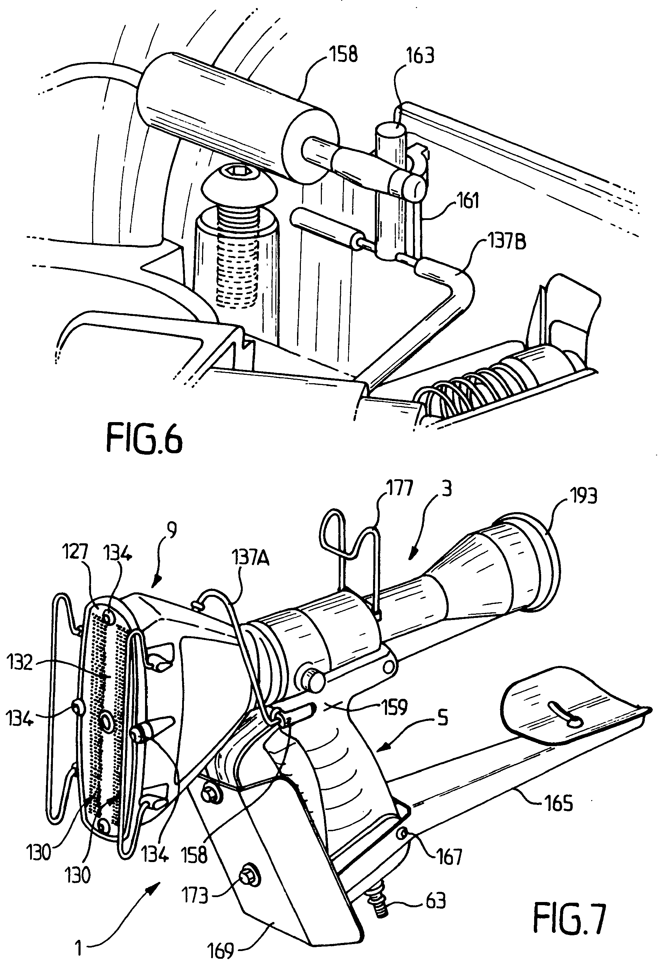

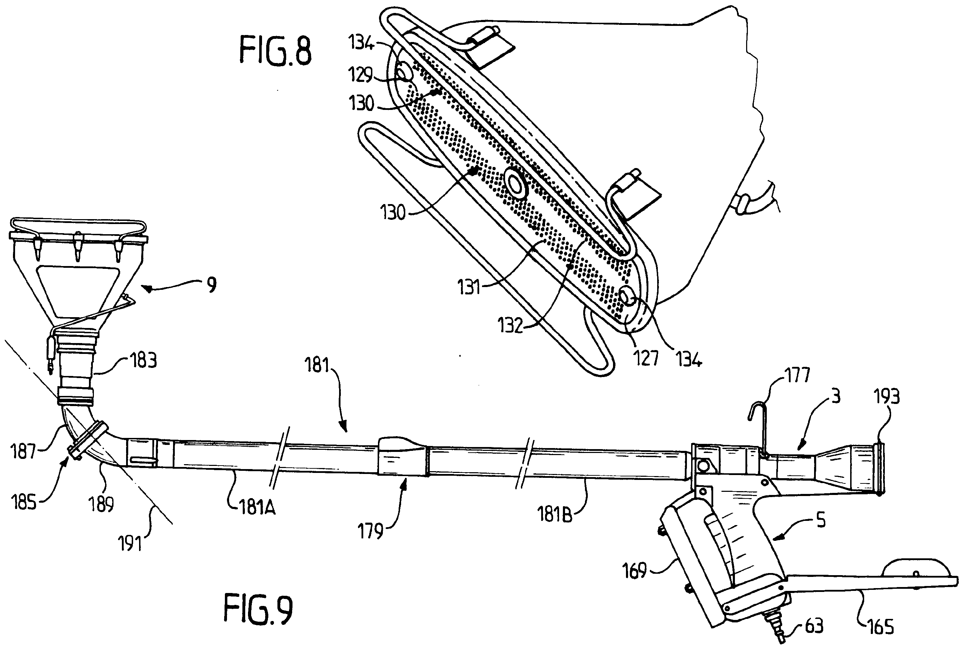

La grille 127 est mieux visible sur les figures 7 et 8 qui montrent que cette grille 127 présente une pluralité de trous 129 circulaires répartis sur une grande partie de sa surface. Une pluralité de trous 131 de plus petite taille sont intercalés dans la pluralité de trous 129. Au niveau des trous 131 naissent des flammes de longueur plus importante que celle des flammes naissant au niveau des trous 129. Les grandes flammes allument constamment les plus petites et réciproquement. Le gaz arrivant au niveau des trous 127 et 129 est en conséquence constamment enflammé. Ainsi, il se produit grâce aux trous de petite taille 131 une combustion secondaire éloignée de la grille 127, ce qui assure un meilleur rendement de l'outil selon l'invention.

Plus précisément, les trous 129 et 131 sont répartis sur deux zones distinctes 130 de la grille 127 séparées par une zone d'épargne 132 non perforée. Ici, la zone d'épargne est essentiellement rectangulaire et disposée selon le grand axe médian de la grille 127. Dans cette configuration, les zones 130 sont également essentiellement rectangulaires et disposées symétriquement par rapport à la zone d'épargne 132. Cette disposition des trous 129 et 131 permet une bonne aération du pied de flamme, ce qui assure un front de flamme plus court que dans le cas où la totalité de la grille 127 est perforée. À titre d'exemple, la distance séparant une zone 130 du bord de la grille 127 peut être voisine de 35 mm, tandis que la largeur de la zone 132 est alors avantageusement d'environ 6 mm.

On note que des répartitions de trous différentes pourraient être prévues en fonction notamment de l'application envisagée pour la partie brûleur 9.

La Demanderesse a remarqué que l'existence de trous 129 et 131 de taille différente limite les bruits et les vibrations engendrés par la combustion.

La fixation de la grille 127 sur la portion 31 est assurée de préférence au moyen de quatre vis 134 logées dans la portion 31 (figure 7). Les vis 134 sont disposées au voisinage du bord de la grille 127, deux d'entre elles étant situées sur chacun des deux axes de symétrie de cette grille. Une fixation de la grille 127 au moyen de deux vis 134 seulement, disposées sur le grand axe de la grille, est également possible (figure 8).

Les moyens de combustion 11 comprennent en outre des moyens de production d'étincelles 133 disposés au voisinage de la grille 127 pour enflammer le gaz. Ici, ces moyens de production d'étincelles 133 sont portés par la grille 127. En particulier, ils sont disposés au centre de la grille 127.

Les moyens de production d'étincelles 133 sont reliés électriquement d'une part à un organe piézo-électrique 135 par l'intermédiaire d'un fil électrique 137 (seule une portion de ce fil est visible sur la figure 1). D'autre part, les moyens de production d'étincelles 133 sont reliés électriquement à la masse de l'outil 1, comme cela sera expliqué plus loin.

L'organe piézo-électrique 135 est susceptible d'être actionné par le levier 65.

L'organe piézo-électrique 135 présente une partie cylindre 139 logée fixement dans la poignée 5 et une partie coulisseau 141 capable de translation dans le cylindre 139. Cette translation crée une différence de potentiel entre un connecteur de sortie 143 et la masse de l'organe piézo-électrique 135. Ladite masse est reliée à une surface métallique 145 située sur la périphérie du cylindre 139. Ici, la surface métallique est située au voisinage de l'extrémité du cylindre 139 opposée au coulisseau 141.

Le coulisseau 141 est logé dans un évidement 147 ménagé en partie haute du levier 65. Le pivotement du levier 65 expliqué plus haut entraîne le déplacement du coulisseau 141 et a pour conséquence la création d'une différence de potentiel entre le connecteur 143 et la surface 145. Ce connecteur 143 reçoit l'extrémité du fil 137 opposée aux moyens de production d'étincelles 133.

Plus particulièrement, le cylindre 139 est reçu dans un logement ménagé dans la poignée 5 qui communique avec le perçage 45 décrit plus haut, en sorte que le ressort 43 touche la surface 145. Dans le cas avantageux où le téton 41 et le ressort 43 sont réalisés en des matériaux électriquement conducteurs, la masse de l'organe piézo-électrique 135 est alors reliée à la portion de jonction 13, de préférence réalisée également en un matériau conducteur d'électricité. La grille 127 en appui contre l'extrémité de la partie évasée 9 est alors à la masse.

Les moyens de production d'étincelles 133 sont détaillés sur la figure 5. Ils comprennent un puits à gaz 147 réalisé sous la forme d'une douille métallique cylindrique à collerette supportée par la grille d'accrochage de flamme 127. Le puits 147 reçoit par son fond l'extrémité du fil 137 qui est dénudée. Dans cette agencement, le puit 147 est à la masse car il touche la grille 127. La différence de potentiel créée par l'organe piézo-électrique 135 entre les parois du puits 147 et le fil 137 provoque une étincelle qui embrase le gaz contenu dans le puits 147. Pour ce faire, un trou 148 est ménagé au voisinage de la base du puits 147, qui permet le remplissage de ce puits en gaz de combustion.

Pour guider la production de ladite étincelle, un capuchon isolant 149 peut être placé à l'extrémité dénudée du fil 137 dans lequel sont ménagés des trous radiaux. L'étincelle est ainsi produite radialement dans le puit 147.

La fixation du fil 137 dans le puits 147 peut être réalisée au moyen d'une douille isolante 151 de révolution traversée par la partie dénudée du fil 137. Cette douille 151 présente une partie de grand diamètre 153 logée dans le puits 147 en appui contre le fond de ce dernier et une partie de plus petit diamètre 155 dépassant du puits 147 vers la portion 13. Un anneau d'arrêt 157 est disposé dans une rainure non référencée de la partie 155, du côté du fond du puits 147 opposé au côté sur lequel s'appuie la partie 153.

Avantageusement, le fil 137 est réalisée en deux parties 137A et 137B reliées entre elles de manière détachable. Par exemple, l'extrémité d'une portion du fil 137A reliée aux moyens de production d'étincelles 133 est munie d'une fiche électrique 158 susceptible d'être reçue dans une borne 159 reliée à une portion du fil 137B reliée au connecteur 143 (voir par exemple la figure 7). La fiche électrique 158 est par exemple de type "banane".

La figure 6 détaille un exemple de réalisation d'une telle liaison. La borne 159 présente un perçage (non représenté) qui communique avec un puits 161. Ici, le puits 161 est percé sensiblement perpendiculairement à l'axe du perçage de la borne 159. Le fil 137B traverse le puits 161 et la portion de ce fil logée à l'intérieur du puits 161 est dénudée. Une goupille métallique 163 disposée dans le puits 161 vient s'appuyer sur la partie dénudée du fil 137B et vient en tangence avec la fiche 158 lorsque celle-ci est enfichée dans la borne 159. La jonction entre les portions du fil 137A et 137B est ainsi réalisée à moindre coût aux moyens d'éléments standards, largement répandus dans le commerce, et bon marché.

On se réfère maintenant à la figure 7 qui montre l'outil de la figure 1 en perspective. L'outil 1 comprend ici un repose-bras 165 fixé de manière amovible à la partie basse de la poignée 5, par exemple au moyen de vis 167. Le repose-bras 165 est essentiellement constitué d'éléments de tôle métallique pliés.

L'outil 1 de la figure 7 est en outre muni d'un déflecteur de chaleur 169 fixé de manière amovible à la poignée 5. Par exemple, le déflecteur 169 est fixé sur une anse 171 (figure 1) de la poignée 5 disposée devant le levier 65. Par "devant", on entend en direction de la partie brûleur 9. Ici, le déflecteur 169 est fixé par deux systèmes vis-écrous à rondelle 173 coopérant avec des trous 175 ménagés dans l'anse 171 (voir figure 1). Le déflecteur 169 est réalisé par exemple sous la forme d'une portion de tôle métallique légèrement pliée.

Sur la partie supérieure du corps 3, un crochet de suspension 177 peut être prévu. Le crochet 177 est réalisé à partir d'un fil métallique suffisamment rigide plié. Les deux extrémités de ce fil métallique sont pliées à 90° l'une vers l'autre et peuvent être reçues dans deux trous de section circulaire ménagés en alignement mutuel respectivement dans les deux demi-coques constitutives du corps 3. Le crochet 177 peut ainsi être rabattu contre le corps 3.

On comprendra que le crochet 177, le repose-bras 165 et le déflecteur 169 sont optionnels et qu'ils peuvent être prévus indépendamment les uns des autres.

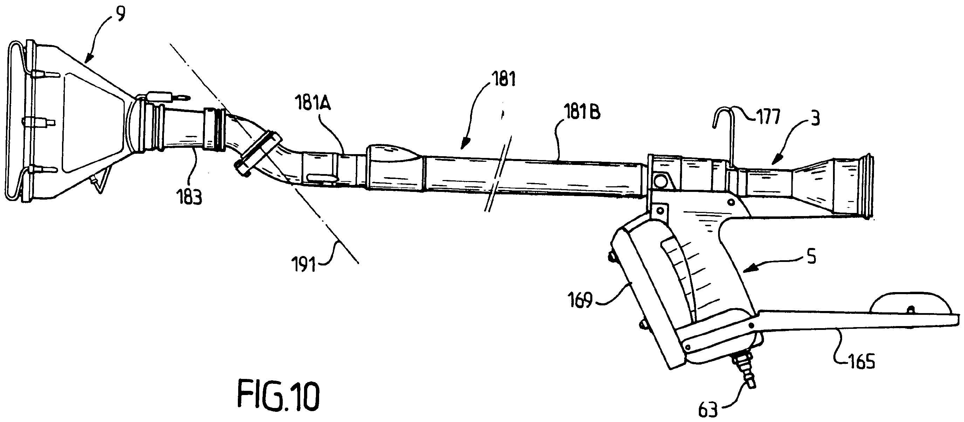

Dans un mode de réalisation particulier de l'invention illustré sur les figures 9 et 10, l'outil 1 comprend une rallonge 179 dont une extrémité est conformée de manière à s'emmancher dans la portion de jonction 15 du corps 3 et dont l'autre extrémité est conformée de manière à recevoir la portion de jonction 13 de la partie brûleur 9. La rallonge 179 peut être tubulaire et par exemple comprendre une première section tubulaire 181 reliée à une seconde section tubulaire 183 par l'intermédiaire d'une articulation 185.

La section 183 est susceptible de recevoir la partie brûleur 9, tandis que la section 181 peut être emmanchée dans le corps 3. L'articulation 185 est constituée en deux parties 187 et 189 respectivement montées sur les sections 183 et 181, par exemple par emmanchement. Les parties 187 et 189 sont agencées de manière à pouvoir tourner l'une par rapport à l'autre autour d'un axe 191 oblique par rapport à la direction longitudinale de chaque section tubulaire 187 et 189. Ici, l'axe 191 forme un angle voisin de 45' avec ladite direction longitudinale. L'axe longitudinal de la section 183 peut se déplacer par rapport à l'axe longitudinal de la section 181 en décrivant un cône autour de l'axe 191 dont le demi-angle au sommet est voisin de 45'. Dans ce déplacement, l'axe longitudinal de la section 183 forme avec l'axe longitudinal de la section 181 un angle variant entre sensiblement 90' et 0'. Lorsque les axes des sections 181 et 183 forment un angle voisin de 0', ces derniers sont légèrement décalés l'un de l'autre.
En option, l'axe longitudinal de la section 183 peut en outre pivoter sur 360' autour de l'axe longitudinal de la section 181. On comprend que ce dernier pivotement peut être combiné au mouvement de l'articulation 185 pour obtenir une pluralité de positionnements de la partie brûleur 9 par rapport au corps 3.

Une portion d'extrémité de la section 181 s'emmanchant dans la portion de jonction 15 présente sur sa circonférence au moins un évidement (non représenté) dont la forme correspond à celle de l'extrémité du téton 41 faisant saillie à l'intérieur de la portion de jonction 15. Lorsque le téton 41 est logé dans cet évidemment, il interdit toute rotation de la portion d'extrémité de la section 181 par rapport à la portion de jonction 15.

Dans d'autres modes de réalisation, la portion d'extrémité de la section 181 présente une pluralité d'évidements (non représentés) dont les différentes positions angulaires définissent des positions angulaires différentes de la section 181, et par conséquent du brûleur 9, par rapport au corps 3 et à la poignée 5. Autrement dit, la rallonge 179 peut alors pivoter par rapport au corps 3 autour de son axe longitudinal permettant ainsi d'orienter la partie brûleur 9.

En outre, dans l'exemple de la réalisation de la figure 9, la section 181 est télescopique et comprend deux sections tubulaires 181A et 181B coulissant l'une dans l'autre.

Dans une position relative particulière des éléments 187 et 189 de l'articulation 185 illustrée sur la figure 10, l'axe de la section tubulaire 183 est parallèle à l'axe longitudinal de la section tubulaire 181.

Optionnellement, la rallonge 179 peut être munie d'une poignée (non représentée) se fixant par exemple sur la section tubulaire 181 de manière à compenser le moment de flexion induit par la rallonge 179.

On comprend que du gaz circule à l'intérieur des sections tubulaires 181 et 183 ainsi qu'à l'intérieur de l'articulation 185 en sorte que des éléments d'étanchéité doivent être prévus à chaque jonction d'éléments.

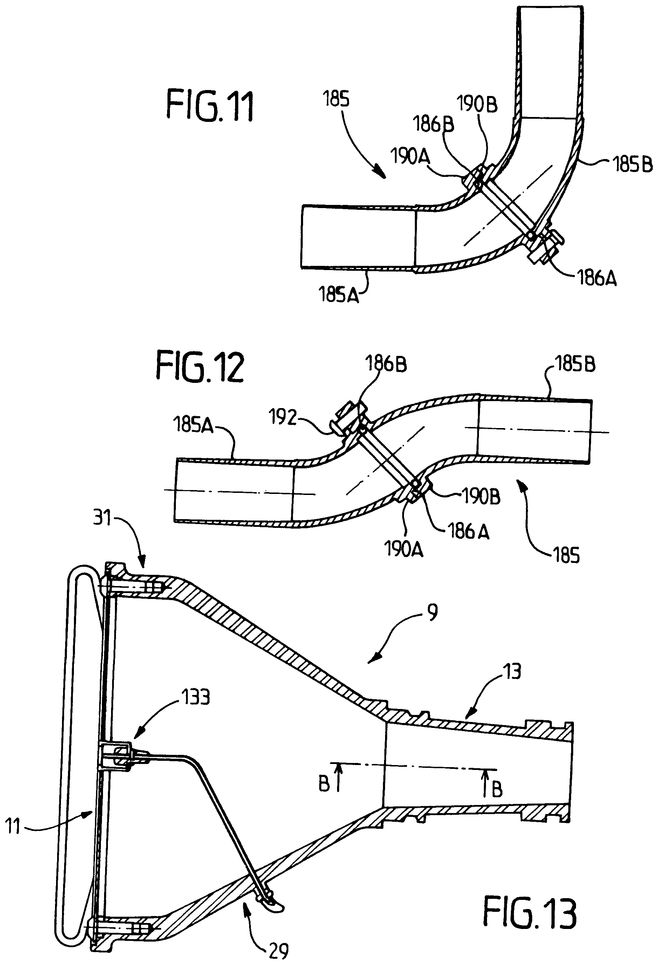

Les figures 11 et 12 détaillent la structure de l'articulation 185. L'articulation 185 est essentiellement constituée d'une section 185A tubulaire dont une portion d'extrémité est conformée de manière à s'emmancher dans la section 181 de la rallonge 179 et d'une section 185B dont une portion extrémité est conformée de manière à s'emmancher dans la section 183 de la rallonge 179. Une autre extrémité de la section 185A est légèrement courbée. De même une autre extrémité de la section 185B est également légèrement courbée. La courbure des sections 185A et 185B est telle, que lorsque les axes longitudinaux des portions d'extrémité s'emmanchant dans les sections 181 et 183 sont disposées perpendiculairement entre elles, les portions courbées mises bout à bout forment un coude (figure 11), tandis que, lorsque ces axes sont disposés parallèlement entre eux, les portions coudées mises bout à bout forment sensiblement un "S" (figure 12).

L'une des extrémités de la portion courbée de l'une des sections 185A et 185B présente une portée de section circulaire 186A s'emmanchant avec possibilité de rotation dans un alésage 186B de section circulaire prévu à l'extrémité de la portion courbée de l'autre section 185A ou 185B. Un joint annulaire 188 est coincé entre le fond dudit alésage et l'extrémité de la portée de manière à réaliser une étanchéité entre les deux sections 185A et 185B. Chaque extrémité des portions courbées des sections 185A et 185B est munie d'un collet annulaire 190A et 190B respectivement. Les collets 190A et 190B sont maintenus l'un contre l'autre au moyen de vis 192, par exemple réparties sur la circonférence de ces collets.

La rallonge 179 permet de nouvelles applications de l'outil 1.

Ainsi, l'outil 1 muni de la rallonge 179 permet de faire agir la partie brûleur 9 au niveau du sol tout en conservant à l'utilisateur une station debout. Dans ce cas, la longueur de la rallonge 179 peut être adaptée à la taille de l'utilisateur grâce à la section 181 télescopique. Ceci trouve une application par exemple dans les travaux de couverture de toits au cours desquels il est fréquent d'utiliser des matériaux que l'on fait adhérer en les chauffant (généralement sous forme de bandes enroulées).

L'outil 1 muni de la rallonge 179 permet également d'utiliser la partie brûleur 9 en hauteur. L'outil 1 peut par exemple être utilisé pour couvrir des coques de bateaux mis en cale sèche d'un matériau plastique que l'on fait adhérer par chauffage (ce matériau est par exemple en bande).

L'outil 1 muni de la rallonge 179 peut être utilisé pour toute application dans laquelle un grand débattement de la partie brûleur 9 est souhaité. La rallonge 179 permet en effet de faire agir la partie brûleur 9 sur une zone de large étendue. Par exemple, l'outil 1 muni de la rallonge 179 peut être utilisé pour chauffer du film plastique thermorétractable entourant des palettes de livraison de marchandises. On note en outre que l'empilage des marchandises peut dépasser la hauteur du manutentionnaire, en sorte que la rallonge 179 présente un intérêt considérable.

Dans toutes ces applications, l'articulation 185 peut être utilisée pour atteindre des endroits difficiles d'accès.

On comprendra que l'outil 1 peut également être utilisé sans la rallonge 179 dans chacun des exemples d'utilisation donnés ci-dessus.

Dans un mode de réalisation avantageux, la partie arrière du corps 3 porte extérieurement un anneau 193 de matière élastique (par exemple de caoutchouc) logé dans une rainure annulaire non référencée, comme le montrent les figures 1 (en coupe), 7 et 9 notamment. L'anneau 193 amortit les chocs en cas de chute de l'outil 1.

L'outil 1 selon l'invention présente une bonne ergonomie grâce notamment au déflecteur 169 et au repose-bras 165. Le corps 3 et la poignée 5 étant réalisés en matière plastique, la masse de l'outil 1 est considérablement amoindrie, ce qui rend l'utilisation de l'outil 1 moins pénible. Le crochet 177, la rallonge 179 et l'articulation 185 rendent l'outil 1 plus pratique que les outils connus.
L'outil 1 est constitué en grande partie de pièces largement répandues dans le marché, ce qui lui confère une construction simple et bon marché. En outre, le remplacement de pièces défaillantes, abîmées ou usées, est facilité par la grande disponibilité de ces pièces.
Grâce au dispositif d'alimentation 47, l'outil 1 présente un niveau de sécurité élevé.
Enfin, la partie brûleur 9 de l'outil 1 peut être remplacée par une partie brûleur de forme différente, ce qui permet d'utiliser le corps 3 et la poignée 5 pour des applications différentes.

## Revendications

1. Outil à main à combustion de gaz comprenant un corps allongé (3) traversé longitudinalement par un conduit (7) de circulation de gaz à enflammer et supporté par une poignée de préhension (5), et une partie brûleur (9) prolongeant le corps allongé (3), généralement creuse, munie à son extrémité de moyens de combustion de gaz (11) et dans laquelle débouche le conduit (7), la partie brûleur (9) présentant une portion de jonction (13) opposée aux moyens de combustion (11), le corps allongé (3) présentant également une portion de jonction (15), la portion de jonction (13) de la partie brûleur (9) et la portion de jonction (15) du corps allongé présentant un axe longitudinal commun (16) et étant conformées de manière à s'emmancher réversiblement l'une dans l'autre, le dit outil comprenant en outre des moyens de serrage (33;35;37) de la partie brûleur (9) et du corps allongé (3) entre eux, et étant **caractérisé en ce que** les moyens de serrage (33;35;37) comprennent une surface (38) oblique par rapport à l'axe longitudinal (16), agencée sur la portion de jonction (13) de la partie brûleur (9) et déplaçable longitudinalement sous l'action d'une pièce de visserie (37) disposée transversalement à l'axe longitudinal (16) et solidaire de la portion de jonction (15) du corps allongé (3), et une butée (33) de la partie brûleur (9) contre le corps allongé (3) dans une direction longitudinale.

2. Outil à main selon la revendication 1, **caractérisé en ce que** la portion de jonction (13) de la partie brûleur (9) et la portion de jonction (15) du corps allongé (3) présentent des allures de révolution.

3. Outil à main selon la revendication 2, **caractérisé en ce que** la portion de jonction (13) de la partie brûleur (9) présente une rainure annulaire (35) de section trapézoïdale dont un flanc forme ladite surface oblique (38).

4. Outil à main selon l'une des revendications précédentes, **caractérisé en ce que** la portion de jonction (13) de la partie brûleur (9) et la portion de jonction (15) du corps allongé (3) sont conformées de manière à pivoter l'une par rapport à l'autre sur 360 degrés.

5. Outil à main selon l'une des revendications précédentes, **caractérisé en ce que** la partie brûleur (9) présente une portion intermédiaire (29) généralement évasée entre sa portion de jonction (13) et son extrémité (31).

6. Outil à main selon l'une des revendications précédentes, **caractérisé en ce que** les moyens de combustion (11) comprennent une grille d'accrochage de flamme (127) fermant la partie brûleur (9).

7. Outil à main selon la revendication 6, **caractérisé en ce que** la grille d'accrochage de flamme (127) présente une pluralité de premiers trous (129) répartis sur sensiblement toute la surface de ladite grille (127) et entre lesquels sont intercalés de second trous (131) de plus petite taille.

8. Outil à main selon la revendication 7, **caractérisé en ce que** les premiers trous (129) et les seconds trous (131) sont répartis sur au moins deux zones (130) distinctes de la grille d'accrochage de flamme (127), lesdites zones (130) étant séparées l'une de l'autre par une zone (132) de la grille d'accrochage de flamme (127) dépourvue de premiers (129) et de seconds (131) trous.

9. Outil à main selon l'une des revendications précédentes, **caractérisé en ce que** le corps allongé (3) comprend un organe d'injection de gaz (49) débouchant centralement dans ledit conduit (7).

10. Outil à main selon l'une des revendications précédentes, **caractérisé en ce qu'**il comprend un dispositif d'alimentation en gaz (47) du corps allongé (3) susceptible d'être obturé selon la position d'un levier d'actionnement (65) prévu sur la poignée de préhension (5).

11. Outil à main selon la revendication 10, **caractérisé en ce qu'**une pièce mobile (75) est maintenue dans une première position, ou position d'obturation du dispositif d'alimentation en gaz (45), à l'encontre de moyens de rappel élastique (97) travaillant en compression, par le levier d'actionnement (65), lorsque celui-ci est dans une position de repos.

12. Outil à main selon la revendication 11, **caractérisé en ce que** la pièce mobile (75) est libérée de la première position par pivotement du levier d'actionnement (65) et déplacée jusqu'à une autre position, ou position de libération du dispositif d'alimentation en gaz (67), par l'action des moyens de rappel élastique (97).

13. Outil à main selon la revendication 12, **caractérisé en ce que** la pièce mobile (75) est maintenue dans ladite première position par l'intermédiaire d'une surface de came conique (95) solidaire du levier d'actionnement (65), un sommet de cette came conique (95) étant en contact avec la pièce mobile (75) dans cette première position et se déplaçant à la fois axialement et transversalement par rapport au mouvement de translation de la pièce mobile (75), en libérant cette dernière lors du pivotement du levier d'actionnement (65).

14. Outil à main selon la revendication 13, **caractérisé en ce que** la pièce mobile (75) est maintenue contre la came conique (95) dans ladite autre position par l'action des moyens de rappel élastique (97).

15. Outil à main selon l'une des revendications 10 à 14, **caractérisé en ce que** des moyens de couplage (99) permettant le pivotement du levier d'actionnement (65) sont agencés entre ce dernier et le dispositif d'alimentation en gaz (47) et que les moyens de couplage (99) comprennent un ressort de compression (101) se comprimant partiellement lors dudit pivotement et rappelant le levier d'actionnement dans sa position de repos en se détendant.

16. Outil à main selon l'une des revendications précédentes, **caractérisé en ce qu'**il comprend en outre une rallonge (179) généralement tubulaire présentant une première portion de jonction conformée de manière à s'emmancher avec la portion de jonction (15) du corps allongé (3), et une seconde portion de jonction conformée pour s'emmancher avec la portion de jonction (13) de la partie brûleur (9).

17. Outil à main selon la revendication 16, **caractérisé en ce que** des moyens d'arrêt en rotation (41;43) en au moins une position choisie sont agencés entre ladite première portion de jonction de la rallonge (179) et la portion de jonction (15) du corps allongé (3).

18. Outil à main selon la revendication 17, **caractérisé en ce que** les moyens d'arrêt en rotation (41; 43) comprennent au moins un évidement ménagé dans ladite première portion de jonction de la rallonge (179), dans lequel se loge un doigt (41) monté dans la portion de jonction (15) par l'intermédiaire de moyens de rappel élastique (43).

19. Outil à main selon l'une des revendications 16 à 18, **caractérisé en ce qu'**il comprend en outre une poignée de préhension supplémentaire susceptible d'être fixée de manière détachable sur la rallonge (179).

20. Outil à main selon l'une des revendications 16 à 19, **caractérisé en ce que** la rallonge (179) est de type télescopique.

21. Outil à main selon l'une des revendications 16 à 20, **caractérisé en ce que** la rallonge (179) comprend une articulation (185) agencée au voisinage de la seconde portion de jonction.

22. Outil à main selon la revendication 21, **caractérisé en ce que** la rallonge (179) comprend deux sections tubulaires (181;183) et que l'articulation (185) est constituée de deux parties (187;189) montées respectivement sur lesdites sections et agencées de manière à tourner autour d'un axe oblique (191) par rapport à la direction longitudinale de chaque section tubulaire (181;183).

23. Outil à main selon l'une des revendications précédentes, **caractérisé en ce qu'**il comprend un déflecteur de chaleur (169) monté sur la poignée de préhension (5).

24. Outil à main selon l'une des revendications précédentes, **caractérisé en ce qu'**il comprend un repose-bras (165) fixé de manière détachable sur la poignée de préhension (5).

25. Outil à main selon l'une des revendications précédentes, **caractérisé en ce que** les moyens de combustion (11) comprennent des moyens d'allumage (133;139) de type piézo-électrique.

26. Outil à main selon la revendication 25 rattachée à l'une des revendications 10 à 15, **caractérisé en ce que** les moyens d'allumage (133;139) comprennent des moyens de production d'étincelles (133) alimentés par un organe piézo-électrique (139) actionné par le levier d'actionnement (65).

27. Outil à main selon la revendication 26, **caractérisé en ce que** les moyens de production d'étincelles (133) sont disposés dans la partie brûleur (9) et reliés à un fil électrique (137A) terminé par une fiche (158) qui est reçue de manière amovible dans une borne (159) montée sur le corps allongé (3) et électriquement reliée à l'organe piézo-électrique (139).

28. Outil à main selon la revendication 27, **caractérisé en ce que** la liaison électrique entre la borne (159) et l'organe piézo-électrique (139) comprend un puits (161) ménagé sensiblement perpendiculairement à la borne (159), un fil dénudé (137B) relié à l'organe piézo-électrique (139) et logé au fond dudit puits (161), et une goupille métallique (163) logée dans le puits (161) de manière à mettre en contact le fil dénudé (137B) et la fiche (158) lorsque celle-ci est insérée dans la borne (159).

29. Outil à main selon l'une des revendications 26 à 28 rattachée à l'une des revendications 6 à 8, **caractérisé en ce que** les moyens d'allumage (133;139) comprennent un puits (147) s'ouvrant à proximité de la grille d'accrochage de flamme (127) au fond duquel sont agencés les moyens de production d'étincelles (133).

30. Outil à main selon l'une des revendication 26 à 29, **caractérisé en ce que** la portion de jonction (13) de la partie brûleur (9) est réalisée en matériau électriquement conducteur, que des moyens de rappel élastique (43) supportant un doigt (41), logés dans la portion de jonction (15) du corps (3), sont réalisés en des matériaux électriquement conducteurs, et que les moyens de rappel élastique (41) s'appuient sur une partie métallique (45) extérieure de l'organe piézo-électrique (139) reliée à la masse de ce dernier.

31. Outil à main selon l'une des revendications précédentes, **caractérisé en ce que** le corps allongé (3) supporte un organe d'accrochage (177) de l'outil susceptible d'être rabattu.

## Patentansprüche

1. Gasbefeuertes Handwerkzeug, umfassend einen länglichen Körper (3), der längs von einer Leitung (7) zur Zirkulation von entzündbarem Gas durchquert wird und durch einen Handgriff (5) gehalten wird, und einen Brennerabschnitt (9), der den länglichen Körper (3) verlängert, generell hohl ist, an seinem Ende mit Mitteln zur Verbrennung von Gas (11) versehen ist und in den die Leitung (7) mündet, wobei der Brennerabschnitt (9) einen Verbindungsabschnitt (13) aufweist, der den Verbrennungsmitteln (11) gegenüberliegt, der längliche Körper (3) ebenfalls einen Verbindungsabschnitt (15) aufweist, der Verbindungsabschnitt (13) des Brennerabschnitts (9) und der Verbindungsabschnitt (15) des länglichen Körpers eine gemeinsame Längsachse (16) aufweisen und so ausgebildet sind, dass sie sich reversibel ineinander pressen, das Werkzeug ferner Spannmittel (33; 35; 37) des Brennerabschnitts (9) und des länglichen Körpers (3) untereinander umfasst, und es **dadurch gekennzeichnet ist, dass** die Spannmittel (33; 35; 37) eine Oberfläche (38), die schräg zur Längsachse (16) liegt, an dem Verbindungsabschnitt (13) des Brennerabschnitts (9) angeordnet und unter Einwirkung eines Schraubteils (37) längsverschiebbar ist, das quer zur Längsachse (16) verläuft und mit dem Verbindungsabschnitt (15) des länglichen Körpers (3) fest verbunden ist, und einen Anschlag (33) des Brennerabschnitts (9) gegen den länglichen Körper (3) umfassen.

2. Handwerkzeug nach Anspruch 1, **dadurch gekennzeichnet, dass** der Verbindungsabschnitt (13) des Brennerabschnitts (9) und der Verbindungsabschnitt (15) des länglichen Körpers (3) revoltierende Verläufe aufweisen.

3. Handwerkzeug nach Anspruch 2, **dadurch gekennzeichnet, dass** der Verbindungsabschnitt (13) des Brennerabschnitts (9) eine ringförmige Nut (35) mit trapezförmigem Querschnitt aufweist, deren eine Seitenwand die schräge Oberfläche (38) bildet.

4. Handwerkzeug nach einem der vorangehenden Ansprüche, **dadurch gekennzeichnet, dass** der Verbindungsabschnitt (13) des Brennerabschnitts (9) und der Verbindungsabschnitt (15) des länglichen Körpers (3) derart geformt sind, dass sie um 360 Grad zueinander drehbar sind.

5. Handwerkzeug nach einem der vorangehenden Ansprüche, **dadurch gekennzeichnet, dass** der Brennerabschnitt (9) einen Zwischenabschnitt (29) aufweist, der generell zwischen seinem Verbindungsabschnitt (13) und seinem Ende (31) konisch verläuft.

6. Handwerkzeug nach einem der vorangehenden Ansprüche, **dadurch gekennzeichnet, dass** die Verbrennungsmittel (11) ein Flammenhaltergitter (127) umfassen, das den Brennerabschnitt (9) verschließt.

7. Handwerkzeug nach Anspruch 6, **dadurch gekennzeichnet, dass** das Flammenhaltergitter (127) mehrere erste Löcher (129) aufweist, die im Wesentlichen auf der gesamten Oberfläche dieses Gitters (127) verteilt sind und zwischen denen kleinere zweite Löcher (131) eingefügt sind.

8. Handwerkzeug nach Anspruch 7, **dadurch gekennzeichnet, dass** die ersten Löcher (129) und die zweiten Löcher (131) auf mindestens zwei Bereiche (130) aufgeteilt sind, die von dem Flammenhaltergitter (127) getrennt sind, wobei die Bereiche (130) durch einen Bereich (132) des Flammenhaltergitters (127) voneinander getrennt sind, der frei von ersten (129) und zweiten (131) Löchern ist.

9. Handwerkzeug nach einem der vorangehenden Ansprüche, **dadurch gekennzeichnet, dass** der längliche Körper (3) ein Gaseinspritzglied (49) umfasst, das zentral in die Leitung (7) mündet.

10. Handwerkzeug nach einem der vorangehenden Ansprüche, **dadurch gekennzeichnet, dass** es eine Gasversorgungsvorrichtung (47) des länglichen Körpers (3) umfasst, die je nach Position eines auf dem Handgriff (5) vorgesehenen Betätigungshebels (65) verschließbar ist.

11. Handwerkzeug nach Anspruch 10, **dadurch gekennzeichnet, dass** ein bewegliches Teil (75) durch den Betätigungshebel (65), wenn dieser sich in einer Ruhestellung befindet, in einer ersten Position gehalten wird, bzw. in Verschlussposition der Gasversorgungsvorrichtung (45), gegenüber elastischen Rückstellmitteln (97), die mittels Kompression arbeiten.

12. Handwerkzeug nach Anspruch 11, **dadurch gekennzeichnet, dass** das bewegliche Teil (75) durch Schwenken des Betätigungshebels (65) von der ersten Position freigesetzt wird und durch die Betätigung der elastischen Rückstellmittel (97) bis zu einer anderen Position, bzw. Freigabeposition der Gasversorgungsvorrichtung (67), verlagert wird.

13. Handwerkzeug nach Anspruch 12, **dadurch gekennzeichnet, dass** das bewegliche Teil (75) über eine fest mit dem Betätigungshebel (65) verbundene, sich verjüngende Nockenfläche (95) in der ersten Position gehalten wird, wobei eine Spitze dieses sich verjüngenden Nockens (95) in dieser ersten Position mit dem beweglichen Teil (75) in Kontakt steht und sich sowohl axial als auch transversal bezüglich einer Translationsbewegung des beweglichen Teils (75) verlagert, durch dessen Freisetzen beim Verschwenken des Betätigungshebels (65).

14. Handwerkzeug nach Anspruch 13, **dadurch gekennzeichnet, dass** das bewegliche Teil (75) in der anderen Position durch Betätigung der elastischen Rückstellmittel (97) an dem sich verjüngenden Nocken (95) gehalten wird.

15. Handwerkzeug nach einem der Ansprüche 10 bis 14, **dadurch gekennzeichnet, dass** Kopplungsmittel (99), die das Schwenken des Betätigungshebels (65) ermöglichen, zwischen diesem und der Gasversorgungsvorrichtung (47) vorgesehen sind und dass diese Kopplungsmittel (99) eine Kompressionsfeder (101) umfassen, die bei diesem Schwenken teilweise komprimiert wird und bei ihrer Ausdehnung den Betätigungshebel in seine Ruhestellung zurückbringt.

16. Handwerkzeug nach einem der vorangehenden Ansprüche, **dadurch gekennzeichnet, dass** es ferner eine im Wesentlichen röhrenförmige Verlängerung (179) umfasst, die einen ersten Verbindungsabschnitt, der so ausgebildet ist, dass er sich mit dem Verbindungsabschnitt (15) des länglichen Körpers (3) verklemmt, und einen zweiten Verbindungsabschnitt, der so ausgebildet ist, dass er sich mit dem Verbindungsabschnitt (13) des Brennerabschnitts (9) verklemmt, aufweist.

17. Handwerkzeug nach Anspruch 16, **dadurch gekennzeichnet, dass** Rotationsarretiermittel (41; 43) in mindestens einer gewählten Position zwischen dem ersten Verbindungsabschnitt der Verlängerung (179) und dem Verbindungsabschnitt (15) des länglichen Körpers (3) angeordnet sind.

18. Handwerkzeug nach Anspruch 17, **dadurch gekennzeichnet, dass** die Rotationsarretiermittel (41; 43) mindestens eine Aussparung in dem ersten Verbindungsabschnitt der Verlängerung (179) umfassen, in der über elastische Rückstellmittel (43) ein in dem Verbindungsabschnitt (15) angebrachter Zapfen (41) aufgenommen wird.

19. Handwerkzeug nach einem der Ansprüche 16 bis 18, **dadurch gekennzeichnet, dass** es ferner einen weiteren Handgriff umfasst, der auf der Verlängerung (179) lösbar verbindbar ist.

20. Handwerkzeug nach einem der Ansprüche 16 bis 19, **dadurch gekennzeichnet, dass** die Verlängerung (179) teleskopisch ist.

21. Handwerkzeug nach einem der Ansprüche 16 bis 20, **dadurch gekennzeichnet, dass** die Verlängerung (179) ein Gelenk (185) umfasst, das benachbart zu dem zweiten Verbindungsabschnitt vorgesehen ist.

22. Handwerkzeug nach Anspruch 21, **dadurch gekennzeichnet, dass** die Verlängerung (179) zwei Rohrabschnitte (181; 183) umfasst und das Gelenk (185) aus zwei Teilen (187; 189) besteht, die jeweils auf diesen Abschnitten angebracht und so ausgebildet sind, dass sie um eine schräge Achse (191) bezüglich der Längsrichtung der jeweiligen Rohrabschnitte (181; 183) gedreht werden.

23. Handwerkzeug nach einem der vorangehenden Ansprüche, **dadurch gekennzeichnet, dass** es einen Wärmeableiter (169) umfasst, der auf dem Handgriff (5) angebracht ist.

24. Handwerkzeug nach einem der vorangehenden Ansprüche, **dadurch gekennzeichnet, dass** es eine Armauflage (165) umfasst, die lösbar auf dem Handgriff (5) befestigt ist.

25. Handwerkzeug nach einem der vorangehenden Ansprüche, **dadurch gekennzeichnet, dass** die Verbrennungsmittel (11) piezoelektrische Zündmittel (133; 139) umfassen.

26. Handwerkzeug nach Anspruch 25 abhängig von einem der Ansprüche 10 bis 15, **dadurch gekennzeichnet, dass** die Zündmittel (133; 139) funkenerzeugende Mittel (133) umfassen, die durch ein piezoelektrisches Glied (139) versorgt werden, das durch den Betätigungshebel (65) betätigt wird.

27. Handwerkzeug nach Anspruch 26, **dadurch gekennzeichnet, dass** die funkenerzeugenden Mittel (133) in dem Brennerabschnitt (9) angeordnet und an ein elektrisches Kabel (137A) mit endständigem Stecker (158) angeschlossen sind, der abnehmbar in einem Anschluss (159) aufgenommen wird, der auf dem länglichen Körper (3) angebracht und mit dem piezoelektrischen Glied (139) elektrisch verbunden ist.

28. Handwerkzeug nach Anspruch 27, **dadurch gekennzeichnet, dass** die elektrische Verbindung zwischen dem Anschluss (159) und dem piezoelektrischen Glied (139) ein Bohrloch (161), das im Wesentlichen senkrecht zu dem Anschluss (159) vorgesehen ist, einen frei liegenden Draht (137B), der mit dem piezoelektrischen Glied (139) verbunden und am Boden des Bohrlochs (161) angeordnet ist, und einen Metallstift (163) umfasst, der in dem Bohrloch (161) so angeordnet ist, dass der frei liegende Draht (137B) und der Stecker (158) in Kontakt gebracht werden, wenn dieser in den Anschluss (159) eingefügt ist.

29. Handwerkzeug nach einem der Ansprüche 26 bis 28 abhängig von einem der Ansprüche 6 bis 8, **dadurch gekennzeichnet, dass** die Zündmittel (133; 139) ein Bohrloch (147) umfassen, das sich in der Nähe des Flammenhaltergitters (127) öffnet, an dessen Boden die funkenerzeugende Mitteln (133) ausgebildet sind.

30. Handwerkzeug nach einem der Ansprüche 26 bis 29, **dadurch gekennzeichnet, dass** der Verbindungsabschnitt (13) des Brennerabschnitts (9) aus einem elektrisch leitfähigen Material besteht, dass einen Zapfen (41) tragende elastische Rückstellmittel (43), die in dem Verbindungsabschnitt (15) des Körpers (3) angeordnet sind, aus einem elektrisch leitfähigen Material bestehen, und dass die elastischen Rückstellmittel (41) an einem Metallteil (45) außerhalb des piezoelektrischen Glieds (139) anliegen, das mit der Masse dieses Glieds verbunden ist.

31. Handwerkzeug nach einem der vorangehenden Ansprüche, **dadurch gekennzeichnet, dass** der längliche Körper (3) ein Befestigungsglied (177) des klappbaren Werkzeugs hält.

## Claims

1. Gas-combustion hand tool comprising an elongate body (3) traversed longitudinally by a duct (7) for the circulation of gas to be ignited and supported by a grip handle (5), and a generally hollow burner part (9) extending the elongate body (3) that is provided at its end with gas-combustion means (11) and into which the duct (7) opens, the burner part (9) having a junction portion (13) opposed to the combustion means (11), the elongate body (3) also having a junction portion (15), the junction portion (13) of the burner part (9) and the junction portion (15) of the elongate body having a common longitudinal axis (16) and being configured so as to fit reversibly into one another, said tool further comprising means (33; 35; 37) for clamping the burner part (9) and the elongate body (3) together, and being **characterized in that** the clamping means (33; 35; 37) comprise a surface (38) that is oblique with respect to the longitudinal axis (16), is arranged on the junction portion (13) of the burner part (9) and is moveable longitudinally under the action of a screwing piece (37) arranged transversally to the longitudinal axis (16) and secured to the junction portion (15) of the elongate body (3), and a stop (33) of the burner part (9) that butts against the elongate body (3) in a longitudinal direction.

2. Hand tool according to Claim 1, **characterized in that** the junction portion (13) of the burner part (9) and the junction portion (15) of the elongate body (3) have axisymmetric appearances.

3. Hand tool according to Claim 2, **characterized in that** the junction portion (13) of the burner part (9) has an annular groove (35) of trapezoidal cross section of which a flank forms the said oblique surface (38).

4. Hand tool according to one of the preceding claims, **characterized in that** the junction portion (13) of the burner part (9) and the junction portion (15) of the elongate body (3) are configured so as to pivot relative to one another over 360 degrees.

5. Hand tool according to one of the preceding claims, **characterized in that** the burner part (9) has a generally flared intermediate portion (29) between its junction portion (13) and its end (31).

6. Hand tool according to one of the preceding claims, **characterized in that** the combustion means (11) comprise a flame-catching grid (127) closing the burner part (9).

7. Hand tool according to Claim 6, **characterized in that** the flame-catching grid (127) has a plurality of first holes (129) distributed over substantially the whole surface of said grid (127) and between which there are interposed second holes (131) of smaller size.

8. Hand tool according to Claim 7, **characterized in that** the first holes (129) and the second holes (131) are distributed over at least two separate regions (130) of the flame-catching grid (127), said regions (130) being separated from one another by a region (132) of the flame-catching grid (127) that is devoid of first (129) and second (131) holes.

9. Hand tool according to one of the preceding claims, **characterized in that** the elongate body (3) comprises a gas-injection member (49) opening centrally into said duct (7).

10. Hand tool according to one of the preceding claims, **characterized in that** it comprises a device (47) for supplying gas to the elongate body (3) that is capable of being shut off according to the position of an actuating lever (65) provided on the grip handle (5).

11. Hand tool according to Claim 10, **characterized in that** a moveable piece (75) is held in a first position, or shut-off position, of the gas supply device (45), counter to elastic return means (97) working in compression, by the actuating lever (65) when the latter is in a rest position.

12. Hand tool according to Claim 11, **characterized in that** the moveable piece (75) is released from the first position by pivoting of the actuating lever (65) and moved to another position, or release position, of the gas supply device (67) by the action of the elastic return means (97).

13. Hand tool according to Claim 12, **characterized in that** the moveable piece (75) is held in said first position by way of a surface of a conical cam (95) secured to the actuating lever (65), an apex of this conical cam (95) being in contact with the moveable piece (75) in this first position and moving both axially and transversally with respect to the translational movement of the moveable piece (75), releasing the latter during the pivoting of the actuating lever (65).

14. Hand tool according to Claim 13, **characterized in that** the moveable piece (75) is held against the conical cam (95) in said other position by the action of the elastic return means (97).

15. Hand tool according to one of Claims 10 to 14, **characterized in that** coupling means (99) allowing the pivoting of the actuating lever (65) are arranged between the latter and gas supply device (47), and **in that** the coupling means (99) comprise a compression spring (101) compressing partially during said pivoting and returning the actuating lever into its rest position while relaxing.

16. Hand tool according to one of the preceding claims, **characterized in that** it additionally comprises a generally tubular extension piece (179) having a first junction portion configured so as to fit with the junction portion (15) of the elongate body (3), and a second junction portion configured so as to fit with the junction portion (13) of the burner part (9).

17. Hand tool according to Claim 16, **characterized in that** means (41; 43) for preventing rotation in at least one chosen position are arranged between said first junction portion of the extension piece (179) and the junction portion (15) of the elongate body (3).

18. Hand tool according to Claim 17, **characterized in that** the means (41; 43) for preventing rotation comprise at least one cutout formed in said first junction portion of the extension piece (179), in which a finger (41) mounted in the junction portion (15) by way of elastic return means (43) is housed.

19. Hand tool according to one of Claims 16 to 18, **characterized in that** it additionally comprises an additional grip handle capable of being fixed detachably to the extension piece (179).

20. Hand tool according to one of Claims 16 to 19, **characterized in that** the extension piece (179) is of the telescopic type.

21. Hand tool according to one of Claims 16 to 20, **characterized in that** the extension piece (179) comprises an articulation (185) arranged in the vicinity of the second junction portion.

22. Hand tool according to Claim 21, **characterized in that** the extension piece (179) comprises two tubular sections (181; 183), and **in that** the articulation (185) is formed by two parts (187; 189) mounted respectively on said sections and arranged so as to turn about an axis (191) that is oblique with respect to the longitudinal direction of each tubular section (181; 183).

23. Hand tool according to one of the preceding claims, **characterized in that** it comprises a heat deflector (169) mounted on the grip handle (5).

24. Hand tool according to one of the preceding claims, **characterized in that** it comprises an armrest (165) fastened detachably to the grip handle (5).

25. Hand tool according to one of the preceding claims, **characterized in that** the combustion means (11) comprise ignition means (133; 139) of the piezo-electric type.

26. Hand tool according to Claim 25 linked to one of Claims 10 to 15, **characterized in that** the ignition means (133; 139) comprise spark-production means (133) supplied by a piezo-electric member (139) actuated by the actuating lever (65).

27. Hand tool according to Claim 26, **characterized in that** the spark-production means (133) are arranged in the burner part (9) and connected to an electric wire (137A) terminated by a plug (158) which is received removably in a terminal (159) mounted on the elongate body (3) and electrically connected to the piezo-electric member (139).

28. Hand tool according to Claim 27, **characterized in that** the electrical connection between the terminal (159) and the piezo-electric member (139) comprises a well (161) formed substantially perpendicularly to the terminal (159), a stripped wire (137B) connected to the piezo-electric member (139) and housed at the bottom of said well (161), and a metallic pin (163) housed in the well (161) so as to bring the stripped wire (137B) and the plug (158) into contact when said plug is inserted into the terminal (159).

29. Hand tool according to one of Claims 26 to 28 linked to one of Claims 6 to 8, **characterized in that** the ignition means (133; 139) comprise a well (147) opening in the vicinity of the flame-catching grid (127) and at the bottom of which the spark-production means (133) are arranged.

30. Hand tool according to one of Claims 26 to 29, **characterized in that** the junction portion (13) of the burner part (9) is made of electrically conductive material, **in that** the elastic return means (43) supporting a finger (41), which are housed in the junction portion (15) of the body (3), are made of electrically conductive materials, and **in that** the elastic return means (41) bear on an outer metallic part (45) of the piezo-electric member (139), which part is connected to the earth of the latter.

31. Hand tool according to one of the preceding claims, **characterized in that** the elongate body (3) supports a member (177) for hooking the tool that is capable of being folded over.
